# DEMANDE DE BREVET EUROPEEN

(11) **EP 1 167 803 A1**
(43) Date de publication de la demande: **02.01.2002**
(21) Numéro de dépôt: 01401483.1
(22) Date de dépôt: 08.06.2001
(51) Int. Cl.: F16D 43/24, F16D 27/00

(54) **Dispositif de commande pour relier un pignon monté fou sur un arbre et cet arbre, notamment bour boîte de vitesses de véhicule automobile**

(30) Priorité: 30.06.2000 FR 0008462
(71) Demandeur: Renault, 92100 Boulogne Billancourt (FR)
(72) Inventeur: Buannec, Michel, 78480 Verneuil sur Seine (FR)

(57) **Abrégé**

Dispositif de commande permettant de relier sélectivement un pignon monté fou sur un arbre et cet arbre, comprenant un baladeur annulaire (5) relié en rotation audit arbre (2) et monté coulissant sur cet arbre entre une position crabotée dans laquelle une denture de crabotage (8) de ce baladeur (5) et une denture de crabotage (6) du pignon fou (3) sont en prise et une position de point mort dans laquelle ces dentures de crabotage sont éloignées, un ressort (10) agissant sur ledit baladeur de sa position crabotée vers sa position de point mort, un organe de commande (12) comprenant un pignon de commande (13) qui présente une denture (14) inclinée en prise avec une denture (15) inclinée du baladeur, ainsi un moteur (16) d'entraînement en rotation dudit pignon de commande, de telle sorte qu'en augmentant ou en réduisant la vitesse de rotation du pignon de commande par rapport à la vitesse de l'arbre secondaire, en agissant sur la vitesse de rotation dudit moteur, le baladeur peut être déplacé longitudinalement sous l'effet desdites dentures inclinées l'une sur l'autre de sa position de point mort à sa position crabotée à l'encontre dudit ressort ou de sa position crabotée à sa position de point mort dans le sens de l'action dudit ressort.

## Description

La présente invention concerne un dispositif de commande permettant de relier sélectivement un pignon monté fou sur un arbre et cet arbre, destinés en particulier à être installés dans une boîte de vitesses de véhicule automobile.

Selon une solution classique, un baladeur est relié en rotation à l'arbre et monté coulissant longitudinalement sur cet arbre, des éléments de synchronisation sont interposés entre le baladeur et le pignon monté fou, et une fourchette permet de déplacer le baladeur entre une position de point mort et une position en prise avec le pignon fou, cette fourchette étant actionnée soit par une tringlerie soit par un moteur électrique.

La présente invention a pour but de proposer un dispositif de commande plus simple et commandable par un moteur.

Le dispositif de commande selon l'invention comprend un baladeur annulaire relié en rotation audit arbre et monté coulissant longitudinalement sur cet arbre entre une position crabotée dans laquelle une denture de crabotage de ce baladeur et une denture de crabotage du pignon fou sont en prise et une position de point mort dans laquelle ces dentures de crabotage sont éloignées, un ressort agissant sur ledit baladeur de sa position crabotée vers sa position de point mort, un organe de commande comprenant un pignon de commande qui présente une denture inclinée en prise avec une denture inclinée du baladeur, ainsi qu'un moteur d'entraînement en rotation dudit pignon de commande.

Ainsi, en agissant sur la vitesse de rotation dudit moteur de façon soit à augmenter soit à réduire la vitesse de rotation du pignon de commande par rapport à la vitesse de l'arbre secondaire, le baladeur peut être déplacé longitudinalement sous l'effet desdites dentures inclinées l'une sur l'autre soit de sa position de point mort à sa position crabotée à l'encontre dudit ressort soit de sa position crabotée à sa position de point mort dans le sens de l'action dudit ressort.

Dans le cas où ledit arbre porte un second pignon fou opposé au pignon fou précité, le dispositif de commande selon l'invention peut avantageusement comprendre un second ressort opposé au ressort précité et ledit baladeur comprend alors une seconde denture de crabotage telle que ce baladeur peut être déplacé longitudinalement sous l'effet desdites dentures inclinées l'une sur l'autre et à l'encontre dudit second ressort, de sa position de point mort précitée à une seconde position crabotée dans laquelle sa seconde denture de crabotage est en prise avec une denture de crabotage dudit second pignon fou et réciproquement.

Selon l'invention, ledit ressort comprend de préférence une rondelle conique.

Selon l'invention, le dispositif de commande peut avantageusement comprendre des moyens pour maintenir les dentures de crabotage en prise en exerçant un effort axial supérieur à celui dudit ressort.

Selon l'invention, ledit arbre précité peut avantageusement constituer l'arbre secondaire d'une boîte de vitesses, en particulier de véhicule automobile.

La présente invention sera mieux comprise à l'étude d'un dispositif de commande de passage de vitesses d'une boîte de vitesses, décrit à titre d'exemple non limitatif et illustré par le dessin sur lequel :
- la figure 1 représente une coupe partielle d'une boîte de vitesses montrant un dispositif de commande en position de point mort ;
- et la figure 2 représente une coupe correspondant à celle de la figure 1 dans laquelle le dispositif de commande est en position de prise.

On voit sur les figures qu'on a représenté partiellement une boîte de vitesses 1 qui comprend un carter 1a dans lequel est monté un arbre secondaire 2 qui porte deux pignons 3 et 4 espacés, montés fous sur cet arbre et respectivement en prise avec des pignons d'un autre arbre de cette boîte de vitesses.

Entre les pignons fous 3 et 4 est disposé un baladeur annulaire 5 qui est solidaire en rotation de l'arbre secondaire 2 et qui est mobile le long de ce dernier.

Les pignons fous 3 et 4 présentent, du côté du baladeur 5, des dentures 6 et 7 et ce baladeur 5 présente, de chaque côté, des dentures en saillie 8 et 9. Lorsque le baladeur 5 est dans une position médiane de point mort, ses dentures 8 et 9 sont à distance des dentures correspondantes 6 et 7 des pignons fous 3 et 4.

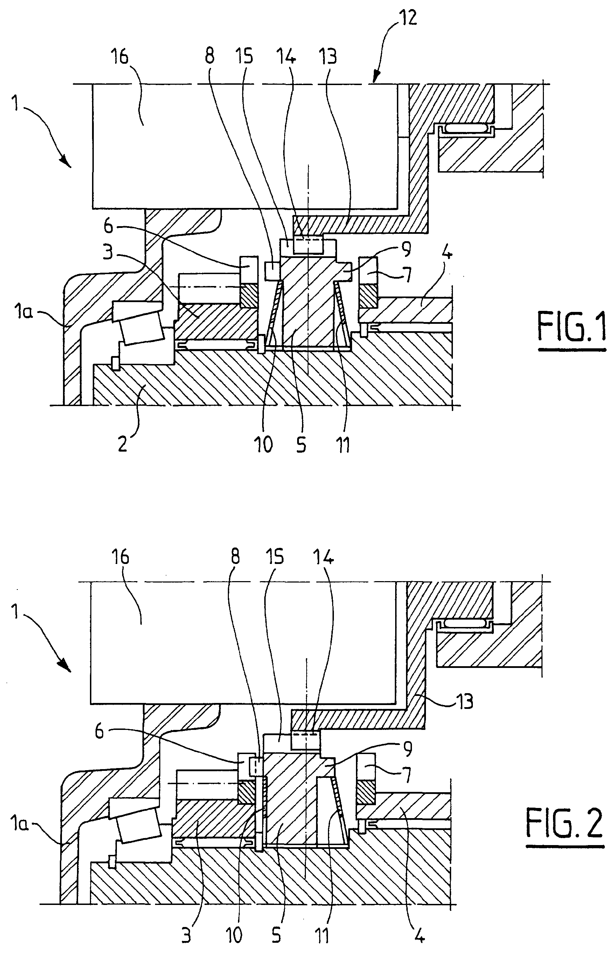

Dans le but de maintenir élastiquement le baladeur 5 dans cette position de point mort visible sur la figure 1, des rondelles coniques 10 et 11 formant ressorts sont interposées entre des butées de l'arbre 2 et les flancs du baladeur 5.

Comme on peut le voir sur la figure 2, lorsque le baladeur 6 est déplacé vers le pignon fou 3 à l'encontre du ressort 10, sa denture latérale 8 est susceptible d'entraîner en prise avec la denture 6 de ce pignon fou. De la même manière, lorsque le pignon fou 5 est déplacé vers le pignon fou 4 à l'encontre du ressort 11, sa denture latérale 9 est susceptible d'entrer en prise avec la denture 7 de ce pignon fou. Les ressorts 10 et 11 constituent des organes de rappel du baladeur 5 vers sa position médiane.

Un dispositif de commande 12 du baladeur 5 comprend un pignon de commande 13 dont l'axe est parallèle à l'arbre secondaire 2. Ce pignon de commande 13 comprend une denture 14 en prise avec une denture 15 prévue à la périphérie du baladeur 5, ce pignon 13 étant relié en rotation à l'extrémité de l'arbre de sortie d'un moteur électrique 16. Le pignon 13 et le moteur 16 sont portés par le carter 1a de la boîte de vitesses 1.

Les dentures 14 et 15 sont prévues inclinées, de telle sorte que la denture 14 du pignon de commande 13 peut exercer des efforts longitudinaux sur la denture 15 du baladeur 5 pour provoquer un déplacement de ce dernier dans un sens ou dans l'autre, en fonction du sens de l'inclinaison de ces denture.

Le dispositif de commande 12 peut alors fonctionner de la manière suivante.

Lorsque l'arbre secondaire 2 et en conséquence le baladeur 5 tournent à la même vitesse que le pignon de commande 13, les dentures 14 et 15 n'ont pas action l'une sur l'autre et le baladeur 5 peut rester dans sa position longitudinale. C'est le cas en particulier lorsque le baladeur 5 se trouve dans sa position de point mort précitée.

En commandant le moteur électrique 16 de manière à faire augmenter ou réduire la vitesse du pignon de commande 13 par rapport à la vitesse de l'arbre secondaire 2 et en conséquence du baladeur 5, un effort longitudinal est exercé par la denture 14 du pignon de commande 13 sur la denture 15 du baladeur dû à l'inclinaison précitée de ces dentures, de telle sorte que le baladeur 5 se déplace dans le sens correspondant à l'encontre du ressort 10 ou du ressort 11, à partir de sa position de point mort.

Au cours de ce déplacement, la face d'extrémité de la denture latérale 8 du baladeur 5 vient en contact contre la face latérale de la denture 6 du pignon fou 3, ou la face d'extrémité de la denture latérale 9 du baladeur 5 vient en appui contre la face latérale de la denture 7 du pigon fou 4. Puis, sous l'effet de la différence de vitesse entre le baladeur 5 et le pignon fou 3, ou le pingon fou 4, elles se déplacent en rotation les unes par rapport aux autres de telle sorte que la denture 8 du baladeur 5 est amenée à s'engager dans la denture 6 du pignon fou 3 ou la denture 9 du baladeur 5 est amenée à s'engager dans la denture 7 du pignon fou 4, pour prendre des positions crabotées correspondantes. Le pignon fou 3 ou le pignon fou 4 sont alors reliés à l'arbre secondaire 2 via le baladeur 5.

Il est particulièrement avantageux que d'une part les dentures 6 et 8 et d'autre part les dentures 7 et 9 soient par exemple en forme de queue d'aronde de manière à constituer des moyens de maintien des positions crabotées correspondantes sans que le moteur électrique 16 n'agisse.

Pour que le baladeur 5 puisse revenir à sa position de point mort, les efforts entre le baladeur 5 et le pignon fou 3 ou le pignon fou 4 doivent tendre vers zéro. Sous l'effet du ressort de rappel 10 ou du ressort de rappel 11 et/ou sous l'effet d'une réduction ou d'une augmentation de la vitesse du pignon de commande 13 provoquée par le moteur électrique 16 contrôlé, sous l'effet des dentures inclinées 14 et 15, le baladeur 5 peut être ramené à sa position de point mort.

Pour commander le moteur électrique 16, afin de provoquer une augmentation ou une réduction de la vitesse du pignon de commande 13, des capteurs des vitesses de rotation des pignons fous 3 et 4 et de l'arbre secondaire 2 peuvent avantageusement être prévus en drs endroits appropriés et de façon classique. Le moteur électrique 16 peut alors être piloté en fonction d'un programme dépendant des informations fournies par ces capteurs et du sens dans lequel on souhaite que le baladeur 5 se déplace pour soit passer la vitesse correspondant au pignon fou 3 soit passer la vitesse correspondant au pignon fou 4 soit installer le baladeur 5 dans sa position de point mort.

La présente invention ne se limite pas à l'exemple ci-dessus décrit qui permet de réaliser de façon simple une boîte de vitesses robotisée. Bien des variantes de réalisation sont possibles sans sortir du cadre défini par les revendications annexées.

## Revendications

1. Dispositif de commande permettant de relier sélectivement un pignon monté fou sur un arbre et cet arbre, **caractérisé par le fait qu'**il comprend un baladeur annulaire (5) relié en rotation audit arbre (2) et monté coulissant longitudinalement sur cet arbre entre une position crabotée dans laquelle une denture de crabotage (8) de ce baladeur (5) et une denture de crabotage (6) du pignon fou (3) sont en prise et une position de point mort dans laquelle ces dentures de crabotage sont éloignées, un ressort (10) agissant sur ledit baladeur de sa position crabotée vers sa position de point mort, un organe de commande (12) comprenant un pignon de commande (13) qui présente une denture (14) inclinée en prise avec une denture (15) inclinée du baladeur, ainsi un moteur (16) d'entraînement en rotation dudit pignon de commande, de telle sorte qu'en agissant sur la vitesse de rotation dudit moteur de façon soit à augmenter soit à réduire la vitesse de rotation du pignon de commande par rapport à la vitesse de l'arbre secondaire, le baladeur peut être déplacé longitudinalement sous l'effet desdites dentures inclinées l'une sur l'autre soit de sa position de point mort à sa position crabotée à l'encontre dudit ressort soit de sa position crabotée à sa position de point mort dans le sens de l'action dudit ressort.

2. Dispositif de commande selon la revendication 1, ledit arbre portant un second pignon fou (4) opposé au pignon fou précité, **caractérisé par le fait qu'**il comprend un second ressort (11) opposé au ressort précité et que ledit baladeur (5) comprend une seconde denture de crabotage (9) telle que ce baladeur peut être déplacé longitudinalement sous l'effet desdites dentures inclinées l'une sur l'autre et à l'encontre dudit second ressort, de sa position de point mort précitée à une seconde position crabotée dans laquelle sa seconde denture de crabotage est en prise avec une denture de crabotage (7) dudit second pignon fou (4) et réciproquement.

3. Dispositif de commande selon l'une des revendications 1 et 2, **caractérisé par le fait que** ledit ressort (10, 11) comprend une rondelle conique.

4. Dispositif de commande selon l'une quelconque des revendications précédentes, **caractérisé par le fait qu'**il comprend des moyens pour maintenir les dentures de crabotage en prise en exerçant un effort axial supérieur à celui dudit ressort.

5. Dispositif de commande selon la revendication 1, **caractérisé par le fait que** ledit arbre constitue l'arbre secondaire (2) d'une boîte de vitesses, en particulier de véhicule automobile.
